# FASCICULE DE BREVET EUROPEEN

(11) **EP 3 514 076 B1**
(45) Date de publication et mention de la délivrance du brevet: **31.08.2022**
(21) Numéro de dépôt: 19305041.6
(22) Date de dépôt: 14.01.2019
(51) Int. Cl.: B65D 1/02, B29C 49/06, B29L 31/00, B29C 49/48

(54) **RECIPIENT COMPRENANT UN FOND VOUTE PRESENTANT DES BOSSAGES DE RIGIDIFICATION REPARTIS EN BANDES ANNULAIRES IMBRIQUEES**
BEHÄLTER, DER EINEN GEWÖLBTEN BODEN MIT AUSSTEIFUNGSHÖCKERN UMFASST, DIE AUF INEINANDER ÜBERGREIFENDEN RINGFÖRMIGEN BÄNDERN VERTEILT SIND
CONTAINER COMPRISING A VAULTED BOTTOM WITH STIFFENING BOSSES DISTRIBUTED IN INTERLOCKED ANNULAR STRIPS

(30) Priorité: 18.01.2018 FR 1850392
(43) Date de publication de la demande: 24.07.2019
(60) Demande divisionnaire: 22185674.3
(73) Titulaire: Sidel Participations, 76930 Octeville-sur-Mer (FR)
(72) Inventeur: BOUKOBZA, Michel, 76930 Octeville-sur-mer (FR)
(74) Mandataire: Sidel Group

(56) Documents cités:
- EP-A1- 1 069 983
- JP-A- 2005 231 637
- US-A1- 2016 311 599

## Description

Le domaine de l'invention est celui de la conception et de la fabrication de récipients en matière plastique.

Plus précisément, l'invention a trait aux récipients obtenus par soufflage ou étirage soufflage à partir d'ébauches (préformes ou récipients intermédiaires ayant subi une ou plusieurs opérations préalables de soufflage) en matière plastique.

La fabrication par soufflage d'un récipient comprend une étape d'introduction, dans un moule à l'empreinte du récipient, d'une ébauche préalablement chauffée à une température supérieure à la température de transition vitreuse de la matière constitutive de la préforme (tel que PET), et une étape d'injection dans l'ébauche d'un fluide (tel que de l'air) sous pression. Un étirage au moyen d'une tige coulissante peut compléter le soufflage.

Cette technique est connue de longue date. Il est également reconnu que la double orientation moléculaire (axiale et radiale) que subit la matière lors du soufflage ou de l'étirage soufflage est parfois trop faible pour conférer de façon certaine au récipient une tenue mécanique suffisante. Ce manque de tenue affecte surtout le fond du récipient, qui subit d'importantes contraintes dynamiques (lors du remplissage) et statiques (après le remplissage, par la pression du contenu ou en conséquence d'un empilement de packs superposés).

Il est connu de rigidifier le fond d'un récipient en lui conférant une forme creuse définissant une voûte destinée à résister aux contraintes précitées. La seule présence d'une telle voûte pouvant se révéler insuffisante, il a même été proposé de la rigidifier au moyen de nervures radiales formées par des surépaisseurs locales de matière, comme décrit par exemple dans le document de brevet américain publié sous le numéro US 4 525401.

Cette structure suppose néanmoins qu'un surcroît de matière soit alloué au fond, en raison des surépaisseurs créées par les nervures.

Il en résulte, d'une part, une augmentation de la masse du récipient, ce qui s'avère clairement contraire aux tendances actuelles d'économie de matière.

Il en résulte, d'autre part, des difficultés de soufflabilité (on nomme "soufflabilité" la capacité du récipient à être formé par soufflage, c'est-à-dire la capacité de la matière à épouser convenablement l'empreinte du moule), car l'épaisseur de la matière rend difficile sa répartition par fluage dans les empreintes du moule correspondant aux nervures.

Pour remédier à cela, une solution ordinaire peut alors consister à augmenter la pression de soufflage, mais cette solution nécessite de réviser à la hausse les capacités du circuit d'injection pneumatique, au détriment du bilan énergétique du procédé de fabrication.

Par ailleurs, il peut être difficile de maîtriser le fluage de la matière de sorte que toutes les nervures présentent les mêmes caractéristiques, notamment en termes de tenue mécanique. Il existe donc un risque de déformation du fond du récipient qui peut entraîner un manque de stabilité de ce dernier une fois rempli et bouché.

Une autre solution consiste à repousser la matière constitutive du fond du récipient, en utilisant pour cela, entre autres, un moule spécial équipé d'un fond de moule mobile en translation qui vient repousser la matière (cf. notamment le document de brevet européen EP 1 069 983). Le repoussage induit un accroissement du taux de déformation de la matière et donc une augmentation mécanique de sa cristallinité, la phase de repoussage conférant au fond du récipient sa forme définitive.

Mais cette technique, appelée "boxage", ne garantit pas que la rigidité du fond sera suffisante et n'exonère pas les constructeurs de recourir à des formes particulières qui demeurent soumises aux contraintes de soufflabilité.

Le besoin persiste par conséquent de proposer des formes susceptibles de conférer au fond un bon compromis entre maîtrise de la quantité de matière, soufflabilité et rigidité structurelle (notamment pour résister aux déformations induites par une surpression dans le récipient, typiquement lorsque le contenu est une boisson carbonatée).

Le document de brevet publié sous le numéro WO 2013/156710, au nom de la déposante, vise notamment à répondre à ce besoin. Tel qu'illustré sur la figure 1, ce document propose un récipient comprenant un fond 1 ayant une voûte 2 qui présente, en section transversale, un profil étoilé 3.

Le profil étoilé 3 est obtenu par :
- une alternance angulaire de branches courtes 4 et de branches longues 5, les branches longues 5 se terminant à proximité immédiate de l'assise 6 du récipient tandis que les branches courtes 4 sont éloignées de l'assise 6,
- une multitude de facettes 7 joignant une branche courte 4 à une branche longue 5 contigües l'une à l'autre.

De l'avis même des inventeurs, ce type de récipient procure d'excellentes propriétés tout en étant perfectible, notamment au niveau de la perception que peuvent en avoir les clients finaux.

La perception des clients finaux s'entend ici tant d'un point de vue technique que d'un point de vue esthétique.

Du point de vue technique, la proximité des branches longues 5 avec l'assise 6 peut engendrer des difficultés de fabrication.

En effet, il existe un risque que, lors du soufflage du récipient :
- soit la matière ne flue pas convenablement dans le moule,
- soit la matière convenablement fluée se retire de sa position de moulage prédéfinie.

Ce phénomène peut s'observer en particulier dans la zone séparant le profil étoilé 3 de l'assise 6. Cette zone présente en effet une étendue peu importante qui peut favoriser soit un fluage insuffisant soit un retrait de la matière. Il peut en résulter une déformation de cette zone et donc un risque d'instabilité du récipient ou seulement une imperfection visuelle.

En d'autres termes, dans ce cas, l'assise 6 peut être sensiblement ondulée si bien qu'elle ne définit un plan de pose continu mais des sections de pose qui, par ailleurs, peuvent ne pas être totalement coplanaires, ce qui affecte ainsi la bonne stabilité du récipient. Un récipient selon le préambule de la revendication 1 est connu du document JP2005231637A.

L'invention a pour objectif principal de palier les inconvénients de l'art antérieur.

L'invention a notamment pour objectif de proposer un récipient présentant de bonnes caractéristiques mécaniques tout en offrant une bonne soufflabilité.

L'invention a également pour objectif de proposer un tel récipient qui présente une bonne stabilité, qu'il soit rempli ou vide.

L'invention a en outre pour objectif de proposer un tel récipient présentant un aspect esthétique accru par rapport à l'art antérieur.

Ces objectifs, ainsi que d'autres qui apparaîtront par la suite, sont atteints grâce à l'invention qui a pour objet un récipient en matière plastique comprenant un corps s'étendant suivant un axe longitudinal entre une ouverture et un fond, le fond présentant :
- une assise formant un plan de pose du récipient ;
- une voûte concave, de révolution autour de l'axe longitudinal, et s'étendant depuis un voisinage de l'assise jusqu'à une zone centrale amorphe ;
- des bossages de rigidification faisant saillie de la voûte concave et s'étendant radialement à l'intérieur la voûte,
caractérisé en ce que la voûte comprend deux zones distinctes, à savoir une première zone et une seconde zone, séparées par un palier et en ce que les bossages de rigidification sont angulairement espacés les uns des autres en alternant des premiers bossages et des deuxièmes bossages répartis selon :
- une première bande annulaire dans laquelle les premiers bossages s'étendent depuis une première extrémité au voisinage de l'assise jusqu'à une deuxième extrémité, les premiers bossages ménageant une deuxième bande annulaire entre leur deuxième extrémité et la zone centrale amorphe , dans laquelle la deuxième extrémité des premiers bossages débouche dans la seconde zone à une distance du palier comprise entre 25% et 65% de la longueur développée totale de cette seconde zone; ;
- une troisième bande annulaire dans laquelle les deuxièmes bossages s'étendent depuis une première extrémité au voisinage de la zone centrale amorphe jusqu'à une deuxième extrémité, les deuxièmes bossages ménageant une quatrième bande annulaire entre leur deuxième extrémité et l'assise, dans laquelle la deuxième extrémité des deuxièmes bossages débouche dans la première zone, à une distance du palier comprise entre 25% et 65% de la longueur développée totale de cette première zone.

L'alternance des bossages répartis en bandes permet de rigidifier le fond de manière efficace tout en présentant un motif agréable à regarder.

La répartition en alternée des premiers bossages et des deuxièmes bossages en deux bandes offre une bonne répartition des efforts exercés par le contenu du récipient sur la voûte, notamment lorsque le contenu est une boisson carbonatée.

En outre, l'alternance des premiers bossages et des deuxièmes bossages assure une bonne qualité de l'assise, sans pour autant dégrader la résistance mécanique de la voûte, ce qui assure une bonne stabilité au récipient, qu'il soit rempli ou non.

Avantageusement, le fond présente une cinquième bande annulaire, située entre la deuxième extrémité des premiers bossages et la deuxième extrémité des deuxièmes bossages, dans laquelle s'étendent en partie les premiers bossages et les deuxièmes bossages.

Cette cinquième bande annulaire présente une résistance mécanique élevée du fond de façon à ce que la voûte soit résistante dans une portion dans laquelle les efforts sont importants.

Selon l'invention, la voûte comprend deux zones distinctes, à savoir une première zone et une seconde zone, séparées par un palier, et la deuxième extrémité des premiers bossages débouche dans la seconde zone à une distance du palier comprise entre 25% et 65% de la longueur développée totale de cette seconde zone et la deuxième extrémité des deuxièmes bossages débouche dans la première zone, à une distance du palier comprise entre 25% et 65% de la longueur développée totale de cette première zone.

Ainsi, dans la cinquième bande annulaire, il existe un recouvrement annulaire des premiers bossages et des deuxièmes bossages.

Avantageusement, le palier présente un diamètre ØP de palier et l'assise présente un diamètre ØA d'assise tels que le rapport ØP/ ØA est compris entre 0,5 et 0,85.

La présence du palier et ses dimensions assurent qu'en cas de surpression dans le récipient, seule la partie supérieure de la voûte, c'est-à-dire entre le palier et la zone centrale amorphe, ne puisse se retourner, de sorte que l'assise ne soit pas déformée et que le récipient conserve sa stabilité.

Dans ce cas, le palier présente une hauteur HP et la voûte s'étend sur une hauteur HV tels que le rapport HP/ HV est compris entre 0,4 et 0,8.

En d'autres termes, dans une section transversale prise dans cette cinquième bande annulaire, on remarque qu'entre deux premiers bossages successifs se trouve un deuxième bossage, ce qui crée un profil sensiblement étoilé comme dans l'art antérieur. Ceci assure une bonne tenue mécanique, sans pour autant que ce profil ne présente un risque pour la stabilité du récipient.

Selon un mode de réalisation préféré, l'assise présente un diamètre ØA d'assise (encore appelé diamètre ØA de l'assise) et la voûte s'étend sur une hauteur HV tels que le rapport ØA/ HV est compris entre 0,2 et 0,4.

Un tel rapport assure une bonne tenue mécanique de la voûte qui ne risque pas de s'effondrer. Par ailleurs, la soufflabilité du récipient ne s'en trouve pas affectée.

Ainsi, en cas de retournement de la partie supérieure de la voûte, la zone centrale amorphe ne pourra pas s'étendre au-delà du plan pose formé par l'assise de sorte que la stabilité du récipient soir conservée.

Selon un mode de réalisation avantageux :
- la voûte est reliée à l'assise par une section circulaire interne de rayon compris entre 0,5 mm et 3 mm et,
- l'assise se raccorde à un congé de raccordement du fond du récipient au corps du récipient, par une section circulaire externe de rayon compris entre 1 mm et 5 mm.

De telles valeurs dimensionnelles permettent d'éviter un déroulement du fond et un affaissement de la voûte.

En d'autres termes, ces valeurs permettent de limiter le développement des sections circulaires internes et externes, c'est-à-dire leur tendance à adopter une forme rectiligne, ce qui garantit que la voûte conserve une forme lui permettant de résister à la pression dans le récipient.

Avantageusement, les premiers bossages et les deuxièmes bossages s'étendent selon des arcs de cercle respectifs entre leurs premières extrémités respectives et leurs deuxièmes extrémités respectives, chacun des arcs de cercle présentant un rayon de courbure compris entre 25% et 45% du diamètre ØA d'assise.

Les dimensions du rayon de courbure des premiers bossages et des deuxièmes bossages sont choisies de sorte à ne pas affecter la soufflabilité du récipient, tout en garantissant une bonne tenue mécanique du fond.

De préférence, le récipient présente un fond qui comprend au moins cinq premiers bossages et cinq deuxièmes bossages.

Ce nombre de bossages permet également d'assurer une bonne rigidité au fond du récipient sans que cela n'en affecte la soufflabilité.

L'invention a également pour objet un moule pour la fabrication d'un récipient à partir d'une préforme en matériau plastique, le moule comprenant deux parois mobiles l'une par rapport à l'autre destinées à former le corps du récipient et un fond de moule mobile par rapport aux parois pour former le fond du récipient en repoussant la matière plastique constitutive du récipient vers son ouverture, caractérisé en ce que le fond de moule comprend :
- une première partie annulaire destinée à former au moins en partie l'assise ;
- une seconde partie en forme dôme destinée à venir au contact d'une zone centrale amorphe de la préforme pour former la voûte,
la deuxième partie portant :
- une première bande annulaire de saillies destinées à former les premiers bossages au voisinage de l'assise,
- une deuxième bande annulaire de saillies destinées à former les deuxièmes bossages au voisinage de la zone centrale amorphe.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue de dessous d'un fond de récipient selon l'art antérieur ;
- la figure 2 est une vue de face d'un récipient selon l'invention ;
- la figure 3 est une vue de dessous du fond du récipient selon l'invention ;
- la figure 4 une vue de détail du fond de récipient selon l'invention ;
- la figure 5 est une vue en coupe transversale du fond du récipient selon l'invention, selon l'axe V-V de la figure 3 et ;
- la figure 6 est une vue en coupe longitudinale d'un moule de fabrication d'un récipient selon l'invention.

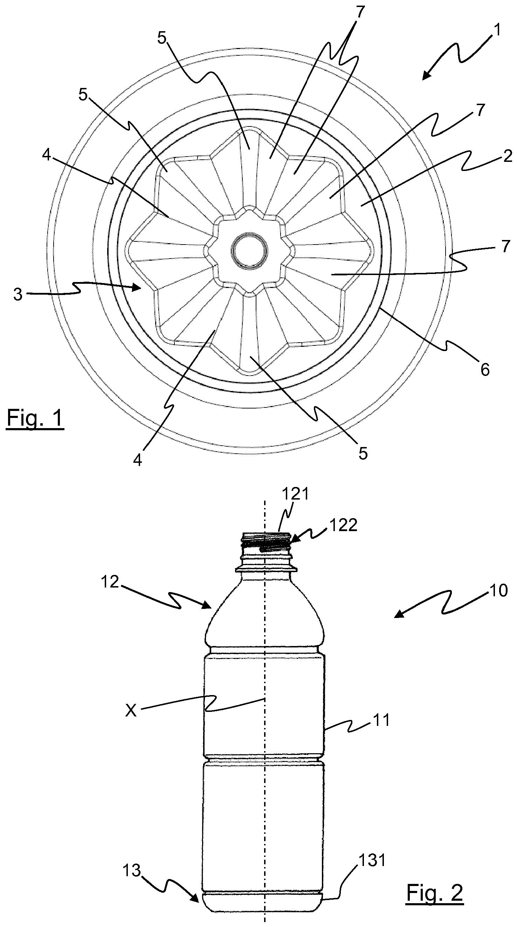

Tel qu'illustré sur la figure 2, un récipient 10 selon l'invention comprend un corps 11 qui s'étend suivant un axe longitudinal X entre une ouverture 121 et un fond 13. L'ouverture 121 est présente classiquement à l'extrémité d'un col 122 situé au-dessus d'une épaule 12 surmontant le corps 11.

Plus particulièrement, le récipient 10 est, dans le mode de réalisation illustré, une bouteille fabriquée à partir d'un matériau thermoplastique tel que le PET (acronyme de polyéthylene téréphthalate).

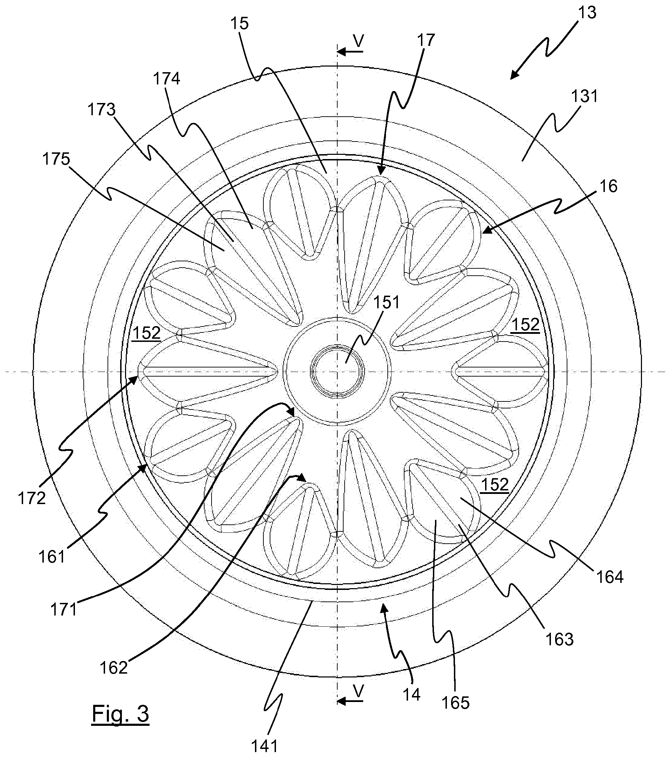

Le fond 13, illustré sur les figures 3 à 5, comprend :
- une assise 14,
- une voûte 15 concave et,
- des bossages 16, 17 de rigidification faisant saillie de la voûte 15 concave et s'étendant radialement à l'intérieur la voûte 15.

L'assise 14 forme un plan de pose 141 du récipient 10. Le plan de pose 141 prend sensiblement la forme d'un cercle sur lequel repose le récipient 10.

L'assise 14 présente un diamètre Ø_{A} (encore appelé "diamètre ØA de l'assise 14") défini en fonction du type et de la quantité de contenu reçu dans le récipient 10. Ainsi, pour un récipient 10 de grande capacité, le diamètre Ø_{A} de l'assise 14 sera supérieur à celui d'un récipient 10 de petite capacité. Il est précisé que la capacité est définie par la quantité de matière (par exemple de liquide) que le récipient 10 peut contenir.

Dans la suite de la description, et de manière conventionnelle, toutes les hauteurs décrites sont mesurées à partir du plan de pose 141 du récipient 10, qui sert de plan de référence.

La voûte 15 est de révolution autour de l'axe longitudinal X, et s'étend depuis un voisinage de l'assise 14 jusqu'à une zone centrale amorphe 151.

Plus précisément, la voûte 15 est reliée à l'assise 14 par une section circulaire interne 18. La section circulaire interne 18 présente un rayon compris entre 0,5 mm et 3 mm. De préférence, la section circulaire interne 18 présente un rayon de 1,5 mm.

Par ailleurs, la section circulaire interne 18 présente une forme concave, c'est-à-dire que qu'elle forme une cavité orientée vers l'intérieur de l'assise 14.

Entre la section circulaire interne 18 et la zone centrale amorphe 151 de la voûte 15, cette dernière comprend deux zones distinctes 15A, 15B formant un palier 24 entre elles. Une première zone 15A est comprise entre la section circulaire interne 18 et la seconde zone 15B, laquelle seconde zone 15B se prolonge jusqu'à la zone centrale amorphe 151. La première zone 15A est déterminée par un arc de cercle et présente une concavité dirigée vers l'intérieur de la voûte (donc vers l'extérieur du récipient). De façon similaire, la seconde partie 15B est également déterminée par un arc de cercle et présente, quant à elle, une convexité vers l'intérieur de la voûte 15, de sorte que le palier 24 est défini par le changement de courbure entre les deux parties. En d'autres termes, le palier 24 constitue la limite séparative entre les zones 15A, 15B. Le diamètre Ø_{P} du palier 24 (encore appelé "diamètre Ø_{P} de palier") est défini comme étant le diamètre au changement de courbure. Il est donc déterminé au niveau du palier 24.

Le diamètre Ø_{P} de palier est avantageusement choisi de sorte que le rapport Ø_{P}/ Ø_{A} est compris entre 0,5 et 0,85. De préférence, le rapport Ø_{P}/ Ø_{A} est de 0,69.

Par ailleurs, le palier 24 est situé à une hauteur H_{P}, mesurée à partir du plan de pose 141 du récipient 10. La hauteur H_{P} est choisie de sorte que le rapport entre hauteur de palier H_{P} et hauteur de voûte H_{V}, H_{P}/ H_{V}, est compris entre 0,4 et 0,8.

Pour obtenir une bonne tenue mécanique du fond 13 du récipient 10, le rapport H_{P}/ Hv est de préférence de 0,63.

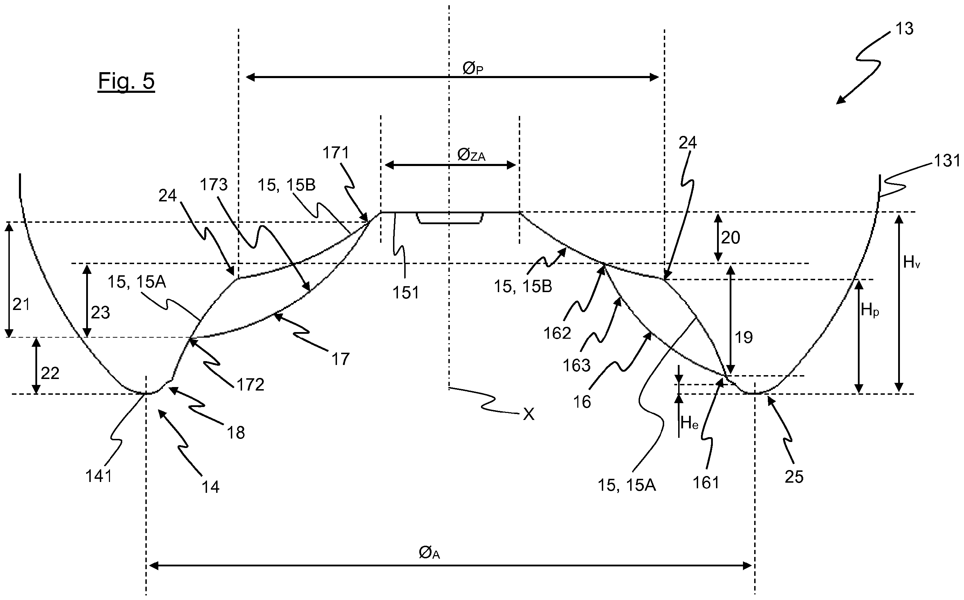

Tel qu'illustré sur la figure 5, la voûte 15 est ainsi écartée du plan de pose 141 d'une hauteur d'écartement Hₑ comprise entre 0,2 mm et 2 mm. De préférence la hauteur d'écartement Hₑ est de 0,75 mm.

La zone centrale amorphe 151 se présente sous la forme d'un disque de matière, de diamètre Ø_{ZA}, centré sur l'axe longitudinal X. Ce disque ne se déforme pas durant le soufflage du récipient 10.

Il est ainsi possible de définir la hauteur Hv de la voûte15, qui est mesurée entre le plan de pose 141 et la zone centrale amorphe 151 de la voûte 15.

Afin de garantir la tenue mécanique de la voûte, la hauteur Hv de la voûte 15 est définie de telle sorte que le rapport Ø_{A}/H_{V} soit compris entre 0,2 et 0,4.

De préférence, on déterminera la hauteur Hv de la voûte de sorte que le rapport Ø_{A}/H_{V} soit égal à 0,29. Ainsi, on obtiendra une tenue mécanique convenable de la voûte 15.

Toujours en référence aux figures 3 à 5, on note que les bossages 16, 17 de rigidification sont angulairement espacés les uns des autres en alternant des premiers bossages 16 et des deuxièmes bossages 17.

Les premiers bossages 16 s'étendent entre une première extrémité 161 et une deuxième extrémité 162, selon un arc de cercle 163 qui présente un rayon de courbure compris entre 25% et 45% du diamètre Ø_{A} de l'assise.

L'arc de cercle 163 des premiers bossages 16 est relié à la voûte 15 par une première facette 164 et par une seconde facette 165 qui s'étendent chacune d'un côté de l'arc de cercle 163.

Les facettes 164, 165 des premiers bossages 16 présentent une forme plane de manière qu'en coupe transversale, les premiers bossages 16 forment un V. Toutefois, les facettes 164, 165 pourraient également présenter une forme bombée.

Les deuxièmes bossages 17 s'étendent entre une première extrémité 171 et une deuxième extrémité 172, selon un arc de cercle 173 qui présente un rayon de courbure compris entre 25% et 45% du diamètre Ø_{A} de l'assise.

L'arc de cercle 173 des deuxièmes bossages 17 est relié à la voûte 15 par une première facette 174 et par une seconde facette 175 qui s'étendent chacune d'un côté de l'arc de cercle 1673.

Les facettes 174, 175 des deuxièmes bossages 17 présentent une forme plane de manière qu'en coupe transversale, les deuxièmes bossages 17 forment un V. Toutefois, les facettes 174, 175 pourraient également présenter une forme bombée.

De préférence, le fond 13 du récipient 10 comprend au moins cinq premiers bossages 16 et cinq deuxièmes bossages 17.

Selon le mode de réalisation illustré sur les figures 3 à 5, le fond 13 comprend sept premiers bossages 16 et sept deuxièmes bossages 17.

En tout état de cause, il est nécessaire que le nombre de premiers bossages 16 et le nombre de deuxièmes bossages soient identiques.

Les bossages 16, 17 sont répartis en plusieurs bandes annulaires, tel que cela est illustré sur les figures 3 à 5.

Une première bande annulaire 19 est définie, dans laquelle les premiers bossages 16 s'étendent depuis leur première extrémité 161 au voisinage de l'assise 14 jusqu'à leur deuxième extrémité 162, qui est située dans la seconde zone 15B de la voûte 15, au-dessus du palier 24, entre celui-ci et la zone centrale amorphe 151.

Les premiers bossages 16 déterminent alors une deuxième bande annulaire 20 entre leur deuxième extrémité 162 et la zone centrale amorphe 151.

Une troisième bande annulaire 21 est définie, dans laquelle les deuxièmes bossages 17 s'étendent depuis leur première extrémité 171 au voisinage de la zone centrale amorphe 151, dans la seconde zone 15B de la voûte 15, jusqu'à leur deuxième extrémité 172, qui est située dans la première zone 15A de la voûte 15, entre le palier 24 et l'assise 14.

Les deuxièmes bossages 17 déterminent une quatrième bande annulaire 22 entre leur deuxième extrémité 172 et l'assise 14.

Une cinquième bande annulaire 23 est limitée par la deuxième extrémité 162 des premiers bossages 16 et la deuxième extrémité 172 des deuxièmes bossages 17. Ainsi, les premiers bossages 16 et les deuxièmes bossages 17 s'étendent chacun en partie dans cette cinquième bande annulaire 23.

Plus particulièrement, les bossages 16 débouchent, par leur deuxième extrémité 162, dans la seconde zone 15B de la voûte 15, à une distance du palier 24 comprise entre 25% et 65% de la longueur développée totale de cette zone 15B.

On entend par "longueur développée totale" de la zone 15B la longueur mesurée de l'arc de cercle déterminant la zone 15B.

Quant aux bossages 17, ils débouchent, par leur deuxième extrémité 172, dans la première zone 15A de la voûte 15, à une distance du palier 24 comprise entre 25% et 65% de la longueur développée totale de cette zone 15A.

On entend par "longueur développée totale" de la zone 15A la longueur de l'arc de cercle déterminant la zone 15A.

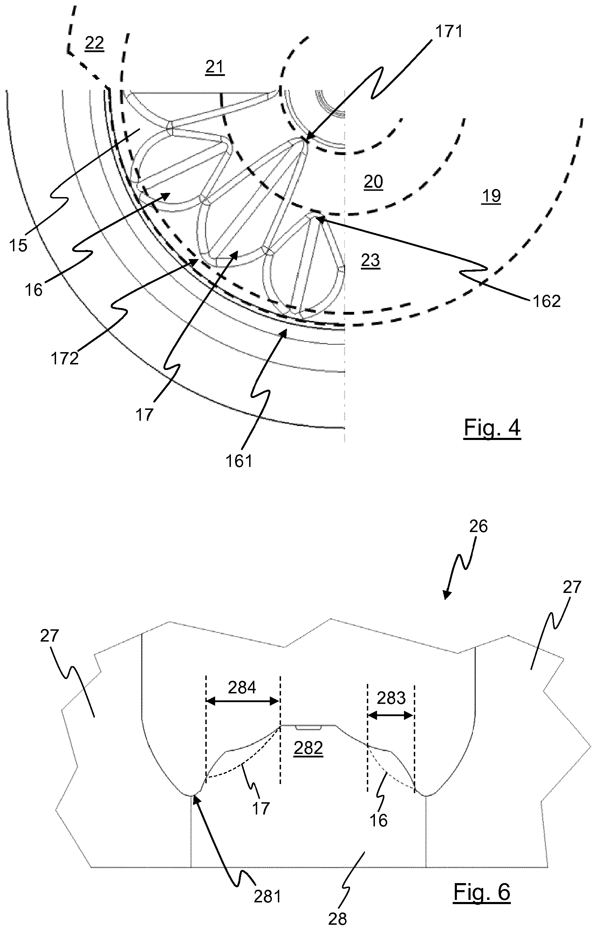

Comme illustré sur les figures 3 et 4, les premiers bossages 16 et les deuxièmes bossages 17 sont distants les uns des autres.

Plus précisément, un premier bossage 16 est écarté d'un deuxième bossage 17 d'une distance inférieure ou égale à 4 mm et de préférence d'une distance d'environ 1 mm.

Toutefois, pour accroître la tenue mécanique du fond, il pourrait être envisagé qu'un premier bossage 16 et un deuxième bossage 17 adjacents soient au contact l'un de l'autre, c'est-à-dire que la distance les séparant soit nulle.

Tel qu'illustré sur les figures 3 à 5, le fond 13 comprend un congé de raccordement 131 par lequel le fond 13 est raccordé au corps 11 du récipient 10.

Plus précisément, en référence à la figure 5, l'assise 14 se raccorde au congé de raccordement 131 par une section circulaire externe 25. La section circulaire externe 25 présente rayon compris entre 1 mm et 5 mm. De préférence, la section circulaire externe 25 présente un rayon de 3mm.

Par ailleurs, la section circulaire externe 25 présente une forme convexe, c'est-à-dire que qu'elle forme une cavité orientée vers l'intérieur du récipient 10.

Pour fabriquer un récipient 10, et plus particulièrement un fond 13 tel qu'il vient d'être décrit, un moule 26, tel qu'illustré à la figure 6, est généralement utilisé.

Un tel moule 26 comprend :
- deux parois 27 latérales destinées à former le corps 11 et l'épaule 12 du récipient 10 et,
- un fond de moule 28 destiné à former le fond 13 du récipient 10.

Les deux parois 27 latérales sont mobiles, de façon à pouvoir être écartées ou rapprochées l'une par rapport à l'autre, par exemple à l'image de l'ouverture d'un portefeuille, pour permettre l'introduction de l'ébauche (préforme) du récipient puis, ensuite, l'extraction du récipient 10 formé.

Avantageusement, le fond de moule 28 est mobile par rapport aux parois 27 latérales de façon à permettre le démoulage des récipients de même que la mise en œuvre de la technique du boxage définie précédemment, c'est-à-dire pour former le fond 13 du récipient 10 en repoussant sa matière plastique constitutive vers son ouverture 121.

Le fond de moule 28 comprend :
- une première partie annulaire 281 destinée à former au moins en partie l'assise 14 et,
- une seconde partie 282 en forme dôme destinée à venir au contact d'une zone centrale amorphe de la préforme pour former la voûte 15,
Comme représenté sur la figure 6, la deuxième partie porte :
- une première bande annulaire 283 de saillies destinées à former les premiers bossages 16 au voisinage de l'assise 14,
- une deuxième bande annulaire 284 de saillies destinées à former les deuxièmes bossages 17 au voisinage de la zone centrale amorphe 151.

Le fond 13 qui vient d'être décrit offre une bonne tenue mécanique aux efforts d'une boisson carbonatée contenue dans le récipient 10 tout en offrant un bel aspect visuel. En effet, lorsque vu de dessous, comme représenté sur la figure 3, le fond 3 présente une forme de fleur de tournesol, les premiers bossages 16 et les deuxièmes bossages 17 formant alors les pétales de la fleur de tournesol.

Par ailleurs, les risques d'instabilité sont limités voire supprimés grâce aux premiers bossages 16 et aux seconds bossages 17.

En effet, la séparation entre les premiers bossages 16 et les deuxièmes bossages 17 permet d'une part de s'assurer que la matière flue convenablement dans le moule 26 et, d'autre part que la matière ne se retire pas de sa position de moulage prédéfinie une fois le moulage effectué.

Par ailleurs, le bon fluage de la matière et l'absence de retrait sont également obtenus grâce à la présence, sur la voûte 15, d'une zone 152, comprise entre l'assise 14, des premiers bossages 16, et des deuxièmes bossages 17 intercalés entre deux premiers bossages 16 consécutifs, laquelle zone 152 est de surface supérieure à celle présente dans l'art antérieur.

Il en résulte alors que les premiers bossages 16 s'étendent jusqu'à proximité immédiate de l'assise 14, ce qui évite de créer une déformation de cette dernière qui pourrait entraîner une instabilité du récipient 10.

## Revendications

1. Récipient (10) en matière plastique comprenant un corps (11) s'étendant suivant un axe longitudinal entre une ouverture (121) et un fond (13), le fond (13) présentant :
- une assise (14) formant un plan de pose (141) du récipient (10) ;
- une voûte (15) concave, de révolution autour de l'axe longitudinal (X), et s'étendant depuis un voisinage de l'assise (14) jusqu'à une zone centrale amorphe (151)
- des bossages (16, 17) de rigidification faisant saillie de la voûte (15) concave et s'étendant radialement à l'intérieur la voûte (15), **caractérisé en ce que** la voûte (15) comprend deux zones distinctes, à savoir une première zone (15A) et une seconde zone (15B), séparées par un palier (24) et **en ce que** les bossages (16, 17) de rigidification sont angulairement espacés les uns des autres en alternant des premiers bossages (16) et des deuxièmes bossages (17) répartis selon :
- une première bande annulaire (19) dans laquelle les premiers bossages (16) s'étendent depuis une première extrémité (161) au voisinage de l'assise (14) jusqu'à une deuxième extrémité (162), les premiers bossages (16) ménageant une deuxième bande annulaire (20) entre leur deuxième extrémité (162) et la zone centrale amorphe (151), dans laquelle la deuxième extrémité (162) des premiers bossages (16) débouche dans la seconde zone (15B) à une distance du palier (24) comprise entre 25% et 65% de la longueur développée totale de cette seconde zone (15B) ;
- une troisième bande annulaire (21) dans laquelle les deuxièmes bossages (17) s'étendent depuis une première extrémité (171) au voisinage de la zone centrale amorphe (151) jusqu'à une deuxième extrémité (172), les deuxièmes bossages (17) ménageant une quatrième bande annulaire (22) entre leur deuxième extrémité (172) et l'assise (14), dans laquelle la deuxième extrémité (172) des deuxièmes bossages (17) débouche dans la première zone (15A), à une distance du palier (24) comprise entre 25% et 65% de la longueur développée totale de cette première zone (15A).

2. Récipient (10) selon la revendication 1, **caractérisé en ce que** le fond (13) présente une cinquième bande annulaire (23), située entre la deuxième extrémité (162) des premiers bossages (16) et la deuxième extrémité (172) des deuxièmes bossages (17), dans laquelle s'étendent en partie les premiers bossages (16) et les deuxièmes bossages (17).

3. Récipient (10) selon l'une quelconque des revendications précédentes, **caractérisé en ce que** le palier (24) présente un diamètre (Ø_{P}) de palier et l'assise (14) présente un diamètre (Ø_{A}) d'assise tels que le rapport (Ø_{P}/ Ø_{A}) est compris entre 0,5 et 0,85.

4. Récipient (10) selon l'une quelconque des revendications précédentes, **caractérisé en ce que** le palier (24) présente une hauteur (H_{P}) et la voûte (15) s'étend sur une hauteur (Hv) tels que le rapport (H_{P}/ Hv) est compris entre 0,4 et 0,8.

5. Récipient (10) selon l'une quelconque des revendications précédentes, **caractérisé en ce que** l'assise (14) présente un diamètre (Ø_{A}) d'assise et la voûte (15) s'étend sur une hauteur (H_{V}) tels que le rapport (Ø_{A}/ Hv) est compris entre 0,2 et 0,4.

6. Récipient (10) selon l'une quelconque des revendications précédentes, **caractérisé en ce que** :
- la voûte (15) est reliée à l'assise par une section circulaire interne (18) de rayon compris entre 0,5 mm et 3 mm et,
- l'assise (14) se raccorde à un congé de raccordement (131) du fond (13) du récipient (10) au corps (11) du récipient (10), par une section circulaire externe (25) de rayon compris entre 1 mm et 5 mm.

7. Récipient (10) selon l'une quelconque des revendications précédentes, **caractérisé en ce que** les premiers bossages (16) et les deuxièmes bossages (17) s'étendent selon des arcs de cercle (163; 173) respectifs entre leurs premières extrémités (161 ; 171) respectives et leurs deuxièmes extrémités (162 ; 172) respectives, chacun des arcs de cercle (163 ; 173) présentant un rayon de courbure compris entre 25% et 45% du diamètre (Ø_{A})de l'assise (14).

8. Récipient (10) selon l'une quelconque des revendications précédentes, **caractérisé en ce qu'**il comprend au moins cinq premiers bossages (16) et cinq deuxièmes bossages (17).

9. Moule (26) pour la fabrication d'un récipient (10) selon l'une des revendications 1 à 8 à partir d'une préforme en matériau plastique, le moule (26) comprenant deux parois (27) mobiles l'une par rapport à l'autre destinées à former le corps (11) du récipient (10) et un fond de moule (28) mobile par rapport aux parois (27) pour former le fond (13) du récipient (10) en repoussant la matière plastique constitutive du récipient (10) vers son ouverture (121), **caractérisé en ce que** le fond de moule (28) comprend :
- une première partie annulaire (281) destinée à former au moins en partie l'assise (14) ;
- une seconde partie (282) en forme dôme destinée à venir au contact d'une zone centrale amorphe de la préforme pour former la voûte (15),
la deuxième partie (282) portant :
- une première bande annulaire (283) de saillies destinées à former les premiers bossages (16) au voisinage de l'assise (14),
- une deuxième bande annulaire (284) de saillies destinées à former les deuxièmes bossages (17) au voisinage de la zone centrale amorphe (151).

## Patentansprüche

1. Behälter (10) aus Kunststoff, welcher einen Körper (11) umfasst, der sich entlang einer Längsachse zwischen einer Öffnung (121) und einem Boden (13) erstreckt, wobei der Boden (13) aufweist:
- eine Basis (14), die eine Aufstellebene (141) des Behälters (10) bildet;
- eine konkave Wölbung (15), die rotationssymmetrisch zur Längsachse (X) ist und sich von einer Umgebung der Basis (14) bis zu einem amorphen zentralen Bereich (151) erstreckt;
- Aussteifungshöcker (16, 17), die aus der konkaven Wölbung (15) vorstehen und sich radial im Inneren der Wölbung (15) erstrecken,
**dadurch gekennzeichnet, dass** die Wölbung (15) zwei verschiedene Bereiche umfasst, nämlich einen ersten Bereich (15A) und einen zweiten Bereich (15B), die durch einen Absatz (24) getrennt sind, und dadurch, dass die Aussteifungshöcker (16, 17) winkelmäßig voneinander beabstandet sind, wobei erste Höcker (16) und zweite Höcker (17) einander abwechseln, welche verteilt sind über:
- einen ersten ringförmigen Streifen (19), in welchem sich die ersten Höcker (16) von einem ersten Ende (161) in der Nähe der Basis (14) bis zu einem zweiten Ende (162) erstrecken, wobei die ersten Höcker (16) einen zweiten ringförmigen Streifen (20) zwischen ihrem zweiten Ende (162) und dem amorphen zentralen Bereich (151) aussparen, in welchem das zweite Ende (162) der ersten Höcker (16) in den zweiten Bereich (15B) in einem Abstand von dem Absatz (24) mündet, der zwischen 25 % und 65 % der gestreckten Gesamtlänge dieses zweiten Bereichs (15B) beträgt;
- einen dritten ringförmigen Streifen (21), in welchem sich die zweiten Höcker (17) von einem ersten Ende (171) in der Nähe des amorphen zentralen Bereichs (151) bis zu einem zweiten Ende (172) erstrecken, wobei die zweiten Höcker (17) einen vierten ringförmigen Streifen (22) zwischen ihrem zweiten Ende (172) und der Basis (14) aussparen, in welchem das zweite Ende (172) der zweiten Höcker (17) in den ersten Bereich (15A) in einem Abstand von dem Absatz (24) mündet, der zwischen 25 % und 65 % der gestreckten Gesamtlänge dieses ersten Bereichs (15A) beträgt.

2. Behälter (10) nach Anspruch 1, **dadurch gekennzeichnet, dass** der Boden (13) einen fünften ringförmigen Streifen (23) aufweist, der sich zwischen dem zweiten Ende (162) der ersten Höcker (16) und dem zweiten Ende (172) der zweiten Höcker (17) befindet und in welchem sich die ersten Höcker (16) und die zweiten Höcker (17) teilweise erstrecken.

3. Behälter (10) nach einem der vorhergehenden Ansprüche, **dadurch gekennzeichnet, dass** der Absatz (24) einen Absatzdurchmesser (Ø_{P}) aufweist und die Basis (14) einen Basisdurchmesser (Ø_{A}) aufweist, derart, dass das Verhältnis (Ø_{P}/Ø_{A}) zwischen 0,5 und 0,85 beträgt.

4. Behälter (10) nach einem der vorhergehenden Ansprüche, **dadurch gekennzeichnet, dass** der Absatz (24) eine Höhe (Hp) aufweist und die Wölbung (15) sich auf einer Höhe (H_{V}) erstreckt, derart, dass das Verhältnis (H_{P}/H_{V}) zwischen 0,4 und 0,8 beträgt.

5. Behälter (10) nach einem der vorhergehenden Ansprüche, **dadurch gekennzeichnet, dass** die Basis (14) einen Basisdurchmesser (Ø_{A}) aufweist und die Wölbung (15) sich auf einer Höhe (Hv) erstreckt, derart, dass das Verhältnis (Ø_{A}/H_{V}) zwischen 0,2 und 0,4 beträgt.

6. Behälter (10) nach einem der vorhergehenden Ansprüche, **dadurch gekennzeichnet, dass**:
- die Wölbung (15) mit der Basis durch einen inneren kreisförmigen Abschnitt (18) mit einem Radius zwischen 0,5 mm und 3 mm verbunden ist und
- die Basis (14) sich an eine Ausrundung zur Verbindung (131) des Bodens (13) des Behälters (10) mit dem Körper (11) des Behälters (10) über einen äußeren kreisförmigen Abschnitt (25) mit einem Radius zwischen 1 mm und 5 mm anschließt.

7. Behälter (10) nach einem der vorhergehenden Ansprüche, **dadurch gekennzeichnet, dass** sich die ersten Höcker (16) und die zweiten Höcker (17) entlang von jeweiligen Kreisbögen (163; 173) zwischen ihren jeweiligen ersten Enden (161; 171) und ihren jeweiligen zweiten Enden (162; 172) erstrecken, wobei jeder der Kreisbögen (163; 173) einen Krümmungsradius aufweist, der zwischen 25 % und 45 % des Durchmessers (Ø_{A}) der Basis (14) beträgt.

8. Behälter (10) nach einem der vorhergehenden Ansprüche, **dadurch gekennzeichnet, dass** er wenigstens fünf erste Höcker (16) und fünf zweite Höcker (17) umfasst.

9. Formwerkzeug (26) zur Herstellung eines Behälters (10) nach einem der Ansprüche 1 bis 8 aus einer Preform aus Kunststoff, wobei das Formwerkzeug (26) zwei relativ zueinander bewegliche Wände (27), die dazu bestimmt sind, den Körper (11) des Behälters (10) zu formen, und einen in Bezug auf die Wände (27) beweglichen Formboden (28) zum Formen des Bodens (13) des Behälters (10) durch Zurückdrücken des Kunststoffs, aus dem der Behälter (10) besteht, in Richtung von dessen Öffnung (121) umfasst, **dadurch gekennzeichnet, dass** der Formboden (28) umfasst:
- einen ersten ringförmigen Teil (281), der dazu bestimmt ist, wenigstens teilweise die Basis (14) zu formen;
- einen zweiten Teil (282) in Kuppelform, der dazu bestimmt ist, mit einem amorphen zentralen Bereich der Preform in Kontakt zu kommen, um die Wölbung (15) zu formen,
wobei der zweite Teil (282) trägt:
- einen ersten ringförmigen Streifen (283) von Vorsprüngen, die dazu bestimmt sind, die ersten Höcker (16) in der Umgebung der Basis (14) zu formen,
- einen zweiten ringförmigen Streifen (284) von Vorsprüngen, die dazu bestimmt sind, die zweiten Höcker (17) in der Umgebung des amorphen zentralen Bereichs (151) zu formen.

## Claims

1. Plastic container (10) comprising a body (11) extending along a longitudinal axis between an opening (121) and a bottom (13), the bottom (13) having:
- a seating surface (14) forming a standing plane (141) for the container (10);
- a concave arch (15), exhibiting symmetry of revolution about the longitudinal axis (X), and extending from near the seating surface (14) as far as an amorphous central zone (151);
- stiffening bosses (16, 17) protruding from the concave arch (15) and extending radially on the inside of the arch (15),
**characterized in that** the arch (15) comprises two separate zones, namely a first zone (15A) and a second zone (15B), which are separated by a level (24) and **in that** the stiffening bosses (16, 17) are angularly spaced apart from one another, alternating first bosses (16) and second bosses (17) distributed according to:
- a first annular band (19) in which the first bosses (16) extend from a first end (161) near the seating surface (14) as far as a second end (162), the first bosses (16) forming a second annular band (20) between their second end (162) and the amorphous central zone (151), wherein the second end (162) of the first bosses (16) opens into the second zone (15B) at a distance from the level (24) of between 25% and 65% of the total developed length of this second zone (15B);
- a third annular band (21) in which the second bosses (17) extend from a first end (171) near the amorphous central zone (151) as far as a second end (172), the second bosses (17) forming a fourth annular band (22) between their second end (172) and the seating surface (14), wherein the second end (172) of the second bosses (17) opens into the first zone (15A), at a distance from the level (24) of between 25% and 65% of the total developed length of this first zone (15A).

2. Container (10) according to Claim 1, **characterized in that** the bottom (13) has a fifth annular band (23), situated between the second end (162) of the first bosses (16) and the second end (172) of the second bosses (17), in which the first bosses (16) and the second bosses (17) extend in part.

3. Container (10) according to either one of the preceding claims, **characterized in that** the level (24) has a level diameter (Ø_{P}) and the seating surface (14) has a seating surface diameter (Ø_{A}) such that the ratio (Ø_{P}/Ø_{A}) is between 0.5 and 0.85.

4. Container (10) according to any one of the preceding claims, **characterized in that** the level (24) has a height (Hp) and the arch (15) extends over a height (H_{V}) such that the ratio (H_{P}/H_{V}) is between 0.4 and 0.8.

5. Container (10) according to any one of the preceding claims, **characterized in that** the seating surface (14) has a seating surface diameter (Ø_{A}) and the arch (15) extends over a height (Hv) such that the ratio (Ø_{A}/H_{V}) is between 0.2 and 0.4.

6. Container (10) according to any one of the preceding claims, **characterized in that**:
- the arch (15) is connected to the seating surface by an internal circular section (18) with a radius of between 0.5 mm and 3 mm and,
- the seating surface (14) is connected to a fillet (131) for connecting the bottom (13) of the container (10) to the body (11) of the container (10), by an external circular section (25) with a radius of between 1 mm and 5 mm.

7. Container (10) according to any one of the preceding claims, **characterized in that** the first bosses (16) and the second bosses (17) extend along respective circular arcs (163; 173) between their respective first ends (161; 171) and their respective second ends (162; 172), each of the circular arcs (163; 173) having a radius of curvature of between 25% and 45% of the diameter (Ø_{A}) of the seating surface (14).

8. Container (10) according to any one of the preceding claims, **characterized in that** it comprises at least five first bosses (16) and five second bosses (17).

9. Mould (26) for the manufacture of a container (10) according to one of Claims 1 to 8 from a plastic preform, the mould (26) comprising two walls (27) that are able to move relative to one another, intended to form the body (11) of the container (10), and a mould bottom (28) that is able to move relative to the walls (27) so as to form the bottom (13) of the container (10) by pushing the constituent plastic material of the container (10) back towards its opening (121), **characterized in that** the mould bottom (28) comprises:
- a first annular part (281) intended to form, at least in part, the seating surface (14);
- a second part (282) in the shape of a dome, intended to come into contact with an amorphous central zone of the preform so as to form the arch (15),
the second part (282) bearing:
- a first annular band (283) of protrusions intended to form the first bosses (16) near the seating surface (14),
- a second annular band (284) of protrusions intended to form the second bosses (17) near the amorphous central zone (151).
